# EUROPÄISCHE PATENTANMELDUNG

(11) **EP 2 608 511 A1**
(43) Veröffentlichungstag der Anmeldung: **26.06.2013**
(21) Anmeldenummer: 12198228.4
(22) Anmeldetag: 19.12.2012
(51) Int. Cl.: H04M 11/02, H04M 1/02, H04N 7/18

(54) **Türsprechanlage und Verfahren zum Betrieb einer Türsprechanlage**

(30) Priorität: 20.12.2011 DE 102011089225
(71) Anmelder: Telegärtner GmbH, 74564 Crailsheim (DE)
(72) Erfinder: Brieger, Günther, 74564 Crailsheim (DE)
(74) Vertreter: Raunecker, Klaus Peter

(57) **Zusammenfassung**

Eine Türsprechanlage (3) weist wenigstens eine Schnittstelle (4) zum Herstellen einer Kommunikationsverbindung (5) zwischen der Türsprechanlage (3) und wenigstens einem externen Gerät (6) auf. Die Türsprechanlage (3) ist eingerichtet, es dem Gerät (6) nach Herstellen der Kommunikationsverbindung (5) zu ermöglichen, wenigstens eine Konfiguration der Türsprechanlage (3) zu ändern. Daneben betrifft die Erfindung ein Verfahren zum Betrieb der erfindungsgemä-βen Türsprechanlage (3).

## Beschreibung

Die vorliegende Erfindung betrifft eine Türsprechanlage mit wenigstens einer Schnittstelle zum Herstellen einer Kommunikationsverbindung zwischen der Türsprechanlage und wenigstens einem externen Gerät. Daneben betrifft die Erfindung ein Verfahren zum Betrieb einer erfindungsgemäßen Türsprechanlage.

Eine Türsprechanlage mit wenigstens einer Schnittstelle zum Herstellen einer Kommunikationsverbindung zu einem externen Gerät ist beispielsweise aus der DE 10 2004 020 316 A1 bekannt. Darin ist eine Türsprechanlage mit einer Türstation, an der mindestens eine Klingeltaste angeordnet ist, mit einem Türöffner zum elektrischen Entriegeln der Tür, einem Mikrokontroller mit integriertem Speicher, mindestens einem mit der Türstation verbundenen Wohntelefon und mindestens einem externen Mobiltelefon offenbart. Um in der Türsprechanlage als Mobilfunkeinheit ein handelsübliches Mobilfunkmodul mit integriertem Bluetooth-Modul verwenden zu können, enthält wenigstens eine der Einheiten der Türsprechanlage ein Bluetooth-Modul, wobei eine zugeordnete Mobilfunkeinheit mit einem integrierten Bluetooth-Modul verwendet wird. Es ist die Aufgabe der vorliegenden Erfindung, eine Türsprechanlage, die sich bequem benutzerdefiniert konfigurieren lässt, sowie ein Verfahren zum Betrieb einer derartigen Türsprechanlage zu schaffen.

Diese Aufgabe wird durch die Türsprechanlage mit den Merkmalen des Anspruchs 1 und das Verfahren mit den Merkmalen des Anspruchs 13 gelöst. Bevorzugte Ausführungsformen sind Gegenstand der abhängigen Ansprüche.

Gemäß der vorliegenden Erfindung wird eine Türsprechanlage mit wenigstens einer Schnittstelle zum Herstellen einer Kommunikationsverbindung zwischen der Türsprechanlage und wenigstens einem externen Gerät zur Verfügung gestellt, wobei die Türsprechanlage eingerichtet ist, es dem Gerät nach Herstellen der Kommunikationsverbindung zu ermöglichen, wenigstens eine Konfiguration der Türsprechanlage zu ändern.

Da die erfindungsgemäße Türsprechanlage durch ein externes Gerät konfigurierbar ist, bei dem es sich um ein gängiges Gerät wie zum Beispiel ein Smartphone oder auch ein Notebook handeln kann, ist es für den Benutzer besonders bequem, die Türsprechanlage an seine persönlichen Bedürfnisse anzupassen. Beispielsweise kann ein Benutzer ein Hintergrundbild eines Bildschirms oder Berührungsbildschirms, bzw. eines Touchscreens, Tastschirms oder Sensorbildschirms der Türsprechanlage, oder das Erscheinungsbild von Klingelköpfen mittels eines ihm bekannten und in der Bedienung vertrauten externen Gerätes individuell einstellen, ohne dass er sich zuvor mit der Bedienungsweise der Türsprechanlage vertraut machen muss.

Insbesondere kann die Schnittstelle als Bluetooth-Schnittstelle ausgebildet sein, neben bereits bekannten, hier nicht genannten und zukünftigen Schnittstellen in Verbindung mit wenigstens einem Kommunikationsprotokoll sind beispielsweise noch folgende Schnittstellen denkbar:
- eine serielle oder eine parallele Schnittstelle
- eine analoge oder eine digitale Schnitstelle
- eine USB-Schnittstelle (Universal Serial Bus)
- eine WLAN-Schnittstelle
- eine Infrarot-Schnittstelle wie zum Beispiel eine Ir-DA-Schnittstelle (Infrared Data Association)
- eine UART-Schnittstelle (Universal Asynchronous Receiver and Transmitter)
- ein Modem oder einen DSL-Anschluss (Digital Subscriber Line) oder einen ADSL-Anschluss (Asymmetric Digital Subscriber Line)
- ein ISDN-Anschluss (Integrated Services Digital Network)
- eine Netzwerkschnittstelle, Ethernet, TCP/IP
- eine DECT-Schnittstelle
- eine WiMAX-Schnittstelle
- ein POTS-Anschluss (Plain Old Telephone Service).

Es ist zur Herstellung der Kommunikationsverbindung sowohl möglich, die Schnittstelle direkt mit dem externen Gerät oder indirekt über zwischengeschaltete Geräte, Medien oder Netzwerke zu verbinden. Dabei kann die Verbindung zwischen der Schnittstelle und dem externen Gerät drahtlos oder kabelgebunden sein. Es ist aber auch möglich, dass die Kommunikationsverbindung abschnittsweise drahtlos ist, während andere Abschnitte der Kommunikationsverbindung kabelgebunden sind.

Eine Variante der Erfindung besteht darin, dass die erfindungsgemäße Türsprechanlage mit einer Umschalteinheit ausgestattet ist, mit welcher eine Mehrzahl von Telefonanschlüssen ausgewählt werden kann, so dass beispielsweise in einem Mehrparteienhaus die Anlage von mehreren Parteien parallel genutzt werden kann, ohne dass eine Partei der anderen eine Leitung zur Verfügung stellen muss. Dabei kann die Umschalteinheit als eigenständiges Gerät an einer geeigneten Stelle im Gebäude installiert werden und beispielsweise über ein vieradriges Kabel mit der Türsprecheinheit verbunden werden. An der Umschalteinheit können die einzelnen Wohneinheiten dann jeweils mit zwei Drähten angeschlossen werden; hierzu sollte in den einzelnen Wohneinheiten eine TK-Anlage mit vorzugweise analogen Ports vorhanden sein. Die Umschalteinheit wird pro Wohneinheit mit einem freien Port der TK-Anlage verbunden.

Die Stromversorgung und die Steuerung der Umschalteinheit kann in vorteilhafter Weise aus der Türsprechanlage über eine Versorgungs- und/oder Steuerleitung erfolgen. Die Türsprechanlage stellt dazu über zwei Drähte insbesondere eine Gleichspannung als Versorgungsspannung zur Verfügung. Über dieselben zwei Drähte kann auch die Steuerung der Umschalteinheit durch ein bspw. serielles Datenprotokoll erfolgen. Zur Beschreibung der Funktionsweise der Umschalteinheit muss zwischen zwei Fällen unterscheiden werden.

### 1. Verbindungsaufbau von der Türsprechanlage zu einer Wohneinheit

Durch das Betätigen einer realen oder auf einem Berührungsbildschirm dargestellten Klingeltaste an der Türsprechanlage wird zunächst der Umschalteinheit durch ein vorzugsweise serielles Protokoll mitgeteilt, welche Wohneinheit gerufen werden soll. Die Umschalteinheit schaltet daraufhin die Analogverbindung der Türsprechanlage auf die jeweilige Wohneinheit durch, und schickt eine Bestätigung durch ein serielles Protokoll an die Türsprechanlage. Daraufhin wählt die Türsprechanlage über die Analogverbindung die für die Klingeltaste programmierte Rufnummer.

Meldet sich der gerufene Teilnehmer, ist der Verbindungsaufbau beendet, und die Sprechverbindung besteht. Ein Ende der Sprechverbindung wird von der Türsprechanlage erkannt, worauf sie der Umschalteinheit ein vorzugsweise serielles Protokoll zum Trennen der Verbindung zu der Wohneinheit sendet. Der Verbindungsabbau ist damit beendet.

### 2. Verbindungsaufbau von einer Wohneinheit zu der Türsprechanlage

Um einen Verbindungsaufbau von einer Wohneinheit zu der Türsprechanlage durchzuführen, muss der Port der TK-Anlage gerufen werden, an dem die Umschalteinheit angeschlossen ist. Die TK-Anlage schaltet dann an den Port die Rufwechselspannung an.

In der Umschalteinheit ist für jede Wohneinheit eine Ruferkennungsschaltung beinhaltet, die die Rufwechselspannung erkennt. Die Umschalteinheit schaltet sofort nach Erkennen der Rufwechselspannung die entsprechende Wohneinheit auf die Verbindung der Türsprechanlage um. Die Türsprechanlage kann nun ihrerseits den Ruf erkennen, und die Verbindung annehmen. Das Annehmen der Verbindung bestätigt die Türsprechanlage der Umschalteinheit durch ein vorzugsweise serielles Protokoll.

Ein Ende der Sprechverbindung wird von der Türsprechanlage erkannt, worauf sie der Umschalteinheit ein vorzugsweise serielles Protokoll zum Trennen der Verbindung zu der Wohneinheit sendet. Der Verbindungsabbau ist damit beendet.

Dies kann dadurch bewerkstelligt werden, dass mittels der Umschalteinheit auf Nebenstellen vorhandener Telefonanlagen aufgeschaltet werden kann.

Im oben dargestellten Fall würden beispielsweise einem Besucher zunächst alle Wohneinheiten der von der Türsprechanlage bedienten Anlage bspw. in einer konventionellen Klingelknöpfen nachgebildeten Darstellung angeboten werden. Abhängig von der Auswahl des Besuchers würde dann mittels der Umschalteinheit die entsprechende Telefonanlage angewählt und der Kontakt über die Türsprechanlage hergestellt.

Die erfindungsgemäße Türsprechanlage kann eine Vielzahl von Komponenten aufweisen, insbesondere eine oder mehrere der nachfolgend aufgeführten:
- ein Gehäuse mit einem Deckel
- einen Bildschirm, insbesondere einen Berührungsbildschirm (Touchscreen)
- einen Fotosensor
- einen Bewegungsmelder
- ein Richtmikrofon (ggf. mit einstellbarer Empfindlichkeit)
- einen Lautsprecher (ggf. mit einstellbarer Lautstärke)
- eine Kamera
- ein Codeschloss
- eine Batterie bzw. einen Akkumulator
- eine Solarzelle
- eine Lichtquelle
- einen Eingang für einen Türöffnerkontakt
- einen RFID-Sensor
- einen Fingerprint-Sensor
- einen Retina-Scanner
- einen Kartenleser
- eine Echtzeituhr bzw. einen DCF77 Empfänger
- Schaltausgänge bspw. für Licht, einen Gong einen Türöffner oder eine Zusatzklingel
- ein Speichermedium wie bspw. eine microSD Karte zum Speichern von Grafik- und Sounddateien
- zwei potenzialfreie Schaltkontakte.

Die Verwendung eines Berührungsbildschirms eröffnet insbesondere die Möglichkeit, auf konventionelle Klingelknöpfe bzw. Tasten zu verzichten. Damit ergeben sich einerseits erweiterte Möglichkeiten zur individualisierten Wahl des Erscheinungsbildes der Türsprechanlage und andererseits lässt sich eine entsprechend ausgestattete Türsprechanlage gegenüber einer konventionellen, mit Knöpfen oder Tasten ausgestatteten Anlage erheblich leichter reinigen.

Dabei ist das Gehäuse der Türsprechanlage vorzugsweise aus einem spritzgegossenen Kunststoffmaterial hergestellt. Des Weiteren kann die Türsprechanlage einen auf dem Gehäuse angeordneten Deckel aufweisen, der aus demselben Material bestehen kann wie das Gehäuse. In einer Ausnehmung des Gehäuses oder des Deckels kann der Berührungsbildschirm angeordnet sein, der sich je nach Benutzerwunsch verschiedenartig gestalten lässt.

Vorteilhafterweise weist die Türsprechanlage wenigstens eine Folie auf, die in wenigstens einem flächigen Abschnitt des Gehäuses und/oder des Deckels angeordnet ist. Beispielsweise kann die Folie auf oder in der Wandung des Gehäuses oder des Deckels der Türsprechanlage vorgesehen sein. Unter Verwendung von aus dem Automobilbau bekannten Verfahren ist es insbesondere möglich, die Folie in das Material des Gehäuses oder Deckels mit einzuspritzen. Andererseits kann die Folie auch nach Fertigstellung des Gehäuses oder Deckels auf diesen aufgebracht, beispielsweise aufgeklebt, werden. Die Folie kann eine Dicke von ungefähr 150 p aufweisen. Der Vorteil der Verwendung der Folie liegt darin, dass die Folie von innen bedruckbar ist und sich somit mit vergleichsweise geringem Aufwand verschiedenste Designvariationen - je nach Wunsch - erreichen lassen.

Des Weiteren wird eine Türsprechanlage bevorzugt, bei welcher der Fotosensor zum Detektieren einer Umgebungshelligkeit vorgesehen ist und die eingerichtet ist, wenigstens eine Lichtquelle zu steuern, beispielsweise zu aktivieren, wenn die vom Fotosensor detektierte Umgebungshelligkeit kleiner als ein vorgegebener Grenzwert ist. Der Fotosensor kann zum Beispiel in das Gehäuse oder einen Deckel der Türsprechanlage integriert sein. Nach Aktivierung der Lichtquelle, die beispielsweise in einer Seitenfläche des Gehäuses angeordnet sein kann, strahlt dieselbe eine Umgebungsbeleuchtung aus, durch welche die Türsprechanlage im Dunkeln oder bei schlechten Sichtbedingungen leichter erkennbar ist. Bevorzugt ist dabei eine Türsprechanlage, deren Seitenflächen durchgehend über im Wesentlichen den gesamten Umfang der Türsprechanlage beleuchtet sind.

Daneben kann der Fotosensor dazu verwendet werden, die Helligkeit des Berührungsbildschirmes in Abhängigkeit der Umgebungshelligkeit zu regeln, so dass einerseits Energie eingespart und andererseits die Lebensdauer des Bildschirms erhöht werden kann.

Eine weitere bevorzugte Ausführung der erfindungsgemäßen Türsprechanlage ist eingerichtet, ein optisches Erscheinungsbild wenigstens eines Teilbereichs ihrer Oberfläche zu ändern, wenn der Bewegungsmelder eine Bewegung registriert. Dadurch wird zum Beispiel das optische Erscheinungsbild der erfindungsgemäßen Türsprechanlage bei Annäherung einer Person geändert. So können insbesondere bestimmte vordefinierte Muster auf der Oberfläche der Türsprechanlage, beispielsweise im Gehäuse oder im Deckel, aktiviert werden, wodurch ein Bewegungseindruck entsteht und die Aufmerksamkeit einer sich nähernden Person auf die Türsprechanlage gelenkt wird. Insbesondere kann hier ein Wellendesign verwendet werden, welches in den Spektralfarben pulsiert.

Dieser Effekt kann insbesondere dadurch erreicht werden, dass im Bereich der Innenseite des Deckels entsprechend angeordnete Lichtquellen vorhanden sind, die je nach gewünschtem optischem Effekt angesteuert werden können. Die von den Lichtquellen emittierte Strahlung kann über einen Lichtwellenleiter so geführt werden, dass sich außen der erwünschte optische Effekt ergibt. Bei dem Lichtwellenleiter kann es sich um eine auf oder an der Innenseite des Deckels verlaufende Rippe insbesondere aus Plexiglas handeln. Die Lichtquellen können als Array von - vorzugsweise verschiedenfarbigen - LED's realisiert sein, deren Strahlung in den Lichtwellenleiter eingekoppelt und der Außenseite des Gehäuses bzw. des Deckels der Türsprechanlage zugeleitet wird. Die Geometrie der Anordnung der Lichtquellen bestimmt dann in Verbindung mit dem Verlauf des Lichtwellenleiters und der farblichen Gestaltung der Lichtquellen das äußere optische Erscheinungsbild der erfindungsgemäßen Türsprechanlage.

In einer anderen Ausführungsform der Erfindung kann die Umgebungsbeleuchtung, zusätzlich oder alternativ zum Fotosensor, auch vom Bewegungsmelder, gegebenenfalls in Verbindung mit einer in dem Gehäuse angeordneten Elektronikeinheit, aktiviert werden, wobei darüber hinaus eine weitere Beleuchtungseinheit, beispielsweise eine im Eingangsbereich eines Gebäudes angeordnete Beleuchtungseinheit, eingeschaltet werden kann.

Die Umgebungsbeleuchtung kann je nach Benutzerwunsch im Hinblick auf Farbe, Identität und gegebenenfalls auch Intensitätsmodulation, z.B. zeitlich, anpassbar sein. Der Berührungsbildschirm kann es ermöglichen, insbesondere bei Annäherung einer Person einen klassischen Klingelknopf darzustellen, der beispielsweise zunächst, also unbetätigt, rot oder mit einer anderen Farbe umrandet ist oder auch rot oder mit einer anderen Farbe leuchtet. Bei Betätigung dieses Klingelknopfs auf dem Berührungsbildschirm kann dieser dann seine Farbe ändern und/oder es kann ein akustisches Signal ausgegeben werden. Damit wird dem Bediener zur Kenntnis gebracht, dass die Klingel aktiviert wurde.

Verfügt die Türsprechanlage über einen Bildschirm oder einen Berührungsbildschirm, so ist es möglich, auf diesem relevante Informationen anzuzeigen, wie zum Beispiel eine nächstgelegene Apotheke, die außerhalb der regulären Dienstzeiten geöffnet hat. Dadurch, dass die Bedienelemente auf dem Berührungsbildschirm dargestellt werden, wird es möglich, eine flexible Einbauposition für die erfindungsgemäße Türsprechanlage zu erzeugen. Die korrekte Ausrichtung der Displayelemente erfolgt dann automatisch.

In einer weiteren Ausführungsform der Erfindung ist die Türsprechanlage für den Außenbereich modifiziert, d. h. sie ist insbesondere mit einer WLAN-Schnittstelle oder einer anderen Drahtlosschnittstelle versehen und mittels einer beispielsweise über ein Solarpanel aufladbaren Batterie ausgestattet, so dass sie bedarfsweise auch gegebenenfalls im Bereich einer Gartentür oder etwas ähnlichem installiert werden kann, ohne dass das Erfordernis besteht, physikalisch Leitungen zu verlegen.

Bei einer weiteren bevorzugten Ausführung der Türsprechanlage ist der Lautsprecher im Inneren des Gehäuses angeordnet und das Gehäuse ist wenigstens in einem dem Lautsprecher benachbarten oder gegenüberliegenden Bereich lückenlos geschlossen. Im Unterschied zu den aus dem Stand der Technik bekannten Türsprechanlagen sind erfindungsgemäß keine Löcher im Gehäuse vorgesehen, um den Schall passieren zu lassen, sondern der Lautsprecher versetzt vielmehr das gesamte Gehäuse oder zumindest Teile davon (insbesondere einen Deckel, sofern vorhanden) in Schwingung, so dass gesprochene Sprache oder anderweitige Töne in einer ausreichenden Qualität an die Umgebung übertragen werden können. Im Inneren des Gehäuses kann ferner ein Mikrofon zur Realisation einer Gegensprechfunktion angeordnet sein.

In einer weiteren vorteilhaften Ausgestaltung der Erfindung ist das Mikrofon als MEMS-Mikrofon ausgestaltet. Derartige Mikrofone zeichnen sich durch eine hohe Richtcharakteristik aus, so dass die Sprachqualität gegenüber Hintergrundgeräuschen verbessert wird und insbesondere auch das Auftreten von Rückkopplungen durch den eingebauten Lautsprecher unterbunden wird.

Zudem können auch Ansagen in der Art eines Anrufbeantworters aufgenommen und als Sprachausgabe ausgegeben werden.

In Verbindung mit einem Mobilfunkmodul wie beispielsweise einem GSM-Modul (oder auch einem UMTS- oder LTE-Modul) kann eine weitere bzw. alternative Funktionalität der Türsprechanlage verwirklicht werden. Dabei wird die Türsprechanlage mit einem integrierten Modul für die Anbindung an ein Mobilfunknetz, wie beispielsweise GSM, UMTS oder LTE, ausgestattet und das Modul entweder mit einer wechselbaren SIM-Karte oder einem fest integrierten SIM-Chip betrieben.

So kann beispielsweise mittels des nachfolgend beschriebenen Verfahrens auch mit außer Haus befindlichen Personen durch Betätigen der Türsprechanlage Kontakt hergestellt werden:

Das Annähern einer Person wird mittels eines integrierten oder externen Bewegungsmelders festgestellt und die Aufnahme eines Bildes der Person wird ausgelöst, sobald die sich nähernde Person sich in einem Abstand von der Anlage befindet, in welchem noch die gesamte Person oder zumindest deren Gesicht aufgenommen werden kann. Das aufgenommene Bild wird zunächst abgelegt, bspw. in einem Zwischenspeicher der Anlage. Sobald nun die Türklingel betätigt wird, sendet die Türsprechanlage das zwischengespeicherte Bild an einen Server, über welchen dieses sofort an einen Mobilfunkteilnehmer (beispielsweise der Hauseigentümer oder ein Bewohner der entsprechenden Wohnung) weitergeleitet wird. Die Bereitstellung des separaten Servers dient dabei insbesondere dazu, die schnelle Übermittlung des Bildes zu gewährleisten, so dass es nicht zu den von SMS oder MMS her bekannten Verzögerungen kommt. Die beschriebene Funktionalität kann insbesondere als zuschaltbare Option ausgeführt sein, welche beispielsweise bei Abwesenheit des Bewohners aktiviert werden kann. Auch eine automatisierte Aktivierung der Funktion, beispielsweise in Verbindung mit einem Abschließen der Haus- bzw. Wohnungstür als auslösendem Ereignis, ist denkbar.

In einer Variante des Verfahrens wird die läutende Person mittels der Touchscreen zunächst abgefragt, ob sie der Übermittlung ihres Bildes zustimmt, so dass diese Person die Kontrolle darüber behält, ob und an wen ihr Bild übertragen wird. Es ist daneben auch denkbar, in Verbindung mit einer Abwesenheitsanzeige auf dem Display dem Benutzer mitzuteilen, dass durch eine entsprechende Schalterbetätigung (typischerweise das Betätigen eines realen oder auf einem Touchscreen dargestellten Klingelknopfes) die Übermittlung seines Bildes ausgelöst wird.

Dadurch, dass dem Bewohner sofort das aufgenommene Bild übermittelt wird, wird dieser zeitnah informiert. In einer Variante des Verfahrens kann der Bewohner entscheiden, ob er gegebenenfalls über sein Mobiltelefon eine Sprechverbindung zu der Person aufbauen möchte, welche die Türsprechanlage betätigt hat. Dabei hat die Aufnahme des Bildes noch während der Annäherung an die Türsprechanlage den Vorteil, dass in diesem Fall die Wahrscheinlichkeit höher ist, dass die Kamera die sich nähernde Person so weit erfasst, dass eine Identifizierung möglich ist und nicht etwa nur ein Ausschnitt der entsprechenden Person übermittelt wird, wie es typischerweise der Fall ist, wenn sich die Person unmittelbar vor der Türsprechanlage befindet.

Es ist daneben auch denkbar, auf die Übermittlung eines Bildes zu verzichten und im Fall von Abwesenheit sofort bei Betätigung des Klingelknopfes eine Sprechverbindung zu dem Bewohner über dessen Mobiltelefon aufzubauen.

In einer Variante des Verfahrens, welche sich insbesondere für den Einsatz in besonders gesicherten Bereichen anbietet, kann das aufgenommene Bild auch ohne Zutun der aufgenommenen Person an eine Sicherheitszentrale übertragen werden, so dass eine Überwachungsfunktionalität erreicht werden kann.

Eine weitere Anwendungsmöglichkeit für die Türsprechanlage besteht darin, dass sie mit einer Einheit zum Auslesen von RFID-Transpondern oder einer anderen Möglichkeit zum drahtlosen Auslesen elektronischer Etiketten, sogenannter Tags, ausgestattet ist. Diese Funktionalität ist insbesondere innerhalb größerer Komplexe mit kleineren, jeweils mit einer entsprechenden Türsprechanlage ausgestatteten Untereinheiten vorteilhaft. So kann beispielweise über einen entsprechend ausgestatteten Besucherausweis der Besucher identifiziert und mittels des Displays individualisiert in Abhängigkeit seines Zieles bzw. seines Gesprächspartners innerhalb des Komplexes geführt werden. Daneben ist es denkbar, mittels der Türsprechanlage individualisiert nach der Identifikation des Besuchers eine Servicerückfrage, bspw. bei dem Ansprechpartner anzubieten.

Aufgrund der guten Konfigurierbarkeit der erfindungsgemäßen Türsprechanlage kann durch diese eine Vielzahl weiterer Funktionalitäten realisiert werden, von denen nachfolgend einige beispielhaft genannt sind:
- Eine über die Uhrzeit begrenzte Zugangssteuerung, bspw. zu einer Arztpraxis). Während der Sprechzeiten kann der Türöffner von außen direkt an der Türsprechanlage bedient werden. Außerhalb der Sprechzeiten wird eine Verbindung zum Telefon bzw. zur Gegensprechstelle der Türsprechanlage aufgebaut
- Vergabe von Einmalcodes, die zum einmaligen Zugang der Tür am Berührungsbildschirm eingegeben werden können. Diese können auch zusätzlich zeitlich begrenzt sein
- Eingabe des Codes zur Ansteuerung des Türöffners über Gesten auf dem Berührungsbildschirm wie beispielsweise durch Wischen oder durch gleichzeitiges Berühren mit zwei Fingern
- Betrieb der Türsprechanlage direkt an einem analogen Anschluss, ohne eine Telefonanlage zu verwenden, beispielsweise als Notruf- oder Informationstelefon
- Realisierung Zugangskontrolle über ein Bluetooth-Mobiltelefon. So können zum Beispiel Mobiltelefone von Monteuren werden als zugangsberechtigt in der Telefonanlage gespeichert werden. Kommt das gespeicherte Mobiltelefon in die Nähe der Türsprechanlage, wird der Türöffner selbsttätig freigegeben
- automatischer Leitungsabgleich zur optimalen Anpassung an verschiedene Telefonanlagen
- Besetzttonerkennung
- Möglichkeit, für mindestens eine Taste zwei oder mehr Rufnummern zu programmieren
- Einstellbare Schaltzeit des Türöffners bspw. zwischen 1 und 9 Sekunden
- Einstellbare maximale Gesprächsdauer bspw. zwischen 1 und 9 Minuten.

Die Erfindung wird nachfolgend anhand eines Ausführungsbeispiels unter Zuhilfenahme von Figuren näher erläutert. Es zeigen:
- Fig. 1: eine stark schematische Darstellung eines Gebäudes mit einer Türsprechanlage sowie eines externen Gerätes;
- Fig. 2: eine erfindungsgemäße Türsprechanlage;
- Fig. 3: eine Schnittdarstellung eines vorderen Gehäuseteiles der erfindungsgemäßen Türsprechanlage, und
- Fig. 4: eine Prinzipschaltskizze zu einer vorteilhaften Ausführungsform der erfindungsgemäßen Türsprechanlage.

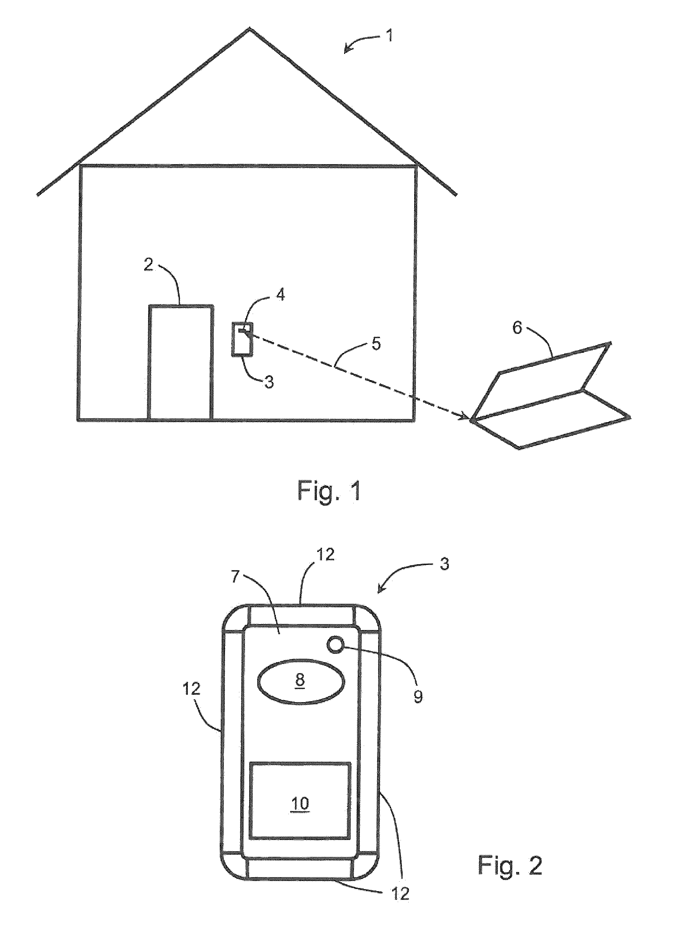

In der Figur 1 ist in stark schematischer Darstellung ein Gebäude 1 mit einer Tür 2 und einer Türsprechanlage 3 zu sehen, die neben der Tür 2 an einer Außenwand des Gebäudes 1 angeordnet ist. Die Türsprechanlage 3 weist eine Bluetooth-Schnittstelle 4 auf, die in der Figur 1 symbolisch angedeutet ist. Mittels der Bluetooth-Schnittstelle 4 ist die Türsprechanlage 3 in der Lage, eine drahtlose Kommunikationsverbindung 5 zu einem entferntem Notebook 6 herzustellen und mit diesem über die Kommunikationsverbindung 5 zu kommunizieren bzw. Daten auszutauschen. Die Türsprechanlage 3 ist dazu eingerichtet, nach Herstellen der Kommunikationsverbindung 5 aktuelle Konfigurationen durch das Notebook 6 ändern zu lassen.

In der Figur 2 ist die Türsprechanlage 3 vergrößert dargestellt, wobei die in Figur 1 symbolisch angedeutete Bluetooth-Schnittstelle 4 hier nicht dargestellt ist. Die Türsprechanlage 3 umfasst ein Gehäuse 7, das im Wesentlichen die Form eines flachen Quaders hat. In eine Vorderseite des Gehäuses 7 sind ein Lautsprecher 8, ein Fotosensor 9 und ein Berührungsbildschirm 10 eingelassen. Entlang der vier Seitenflächen des Gehäuses 7 erstrecken sich jeweilige längliche Lichtquellen 12 im Wesentlichen über die ganze Länge der Seitenflächen.

Der Fotosensor 9 ist für die Umgebungshelligkeit sensitiv, die er detektiert. Dabei ist der Türsprechanlage 3 ein bestimmter Grenzwert für die Umgebungshelligkeit vorgegeben. Sofern der Fotosensor 9 feststellt, dass die Umgebungshelligkeit unterhalb dieses Grenzwerts liegt bzw. diesen Grenzwert unterschreitet, werden die seitlichen Lichtquellen 12 eingeschaltet. Mit Einschalten der Lichtquellen 12 bilden diese für die Türsprechanlage 3 eine Umgebungsbeleuchtung, die es ermöglicht, die Türsprechanlage 3 auch bei Dunkelheit zu erkennen. Die Türsprechanlage 3 kann alternativ zum Fotosensor 9 oder in Kombination mit dem Fotosensor 9 über einen nicht gezeigten Bewegungssensor verfügen und dazu eingerichtet sein, die Lichtquellen 12 bei registrieren einer Bewegung durch den Bewegungssensor einzuschalten.

Sofern ein in der Figur 1 nicht gezeigter Benutzer des Notebooks 6 eine Konfiguration der Türsprechanlage 3 mittels des Notebooks 6 ändern möchte, nimmt das Notebook 6 zunächst eine Bluetooth-Verbindung mit der Bluetooth-Schnittstelle 4 der Türsprechanlage 3 auf. Um unbefugten Personen den Zugriff auf die Türsprechanlage 3 zu verwehren, erlaubt die Türsprechanlage 3 die Herstellung der Kommunikationsverbindung 5 erst dann, wenn sich das Notebook 6 mit einer vorgegebenen Kennung identifizieren kann. Diese Kennung wird vom Notebook 6 bei der Aufnahme der Bluetooth-Verbindung über die Bluetooth-Schnittstelle 4 an die Türsprechanlage 3 übertragen. Sofern die Kennung von der Türsprechanlage 3 verifiziert werden kann, wird von ihr die Herstellung der Kommunikationsverbindung 5 mit dem Notebook 6 gewährt. Kann die Kennung nicht verifiziert werden, so wird die Herstellung der Kommunikationsverbindung 5 von der Türsprechanlage 3 verweigert, womit das Notebook 6 keinen Zugriff auf die Türsprechanlage 3 bekommt. Nach erfolgreicher Herstellung der Kommunikationsverbindung 5 kann der Benutzer jedoch mittels des Notebooks 6 Konfigurationen der Türsprechanlage 3, wie zum Beispiel die Lautstärke ihres Lautsprechers 8, bequem ändern, ohne sich der Türsprechanlage 3 nähern zu müssen.

Mittels des Notebooks 6 kann aber auch der Grenzwert für die Umgebungshelligkeit geändert, beispielsweise erhöht oder erniedrigt, werden um zu bewirken, dass die Umgebungsbeleuchtung erst bei fortgeschrittener Dunkelheit oder schon bei größerer Helligkeit eingeschaltet wird. Desweiteren kann die Farbe des von den Lichtquellen 12 erzeugten Lichts wählbar und mittels des Notebooks 6 einstellbar sein. Ebenso kann die Intensität, mit der die Lichtquellen 12 strahlen, über das Notebook 6 auf die beschriebene Weise eingestellt werden.

Ferner zeigt der Berührungsbildschirm 10 ein vorgegebenes Hintergrundbild an. Auch dieses Hintergrundbild kann auf die soeben erläuterte Weise mittels des Notebooks 6 modifiziert, geändert oder durch ein anderes Hintergrundbild ersetzt werden.

Anstatt der beschriebenen Bluetooth-Schnittstelle 4 kann die Türsprechanlage 3 auch über eine Schnittstelle zu einem Mobilfunknetz oder zum Internet verfügen. In diesem Fall ist es für den Benutzer möglich, sogar aus sehr großer Entfernung Konfigurationen der Türsprechanlage 3 beispielsweise mittels eines Mobiltelefons zu ändern.

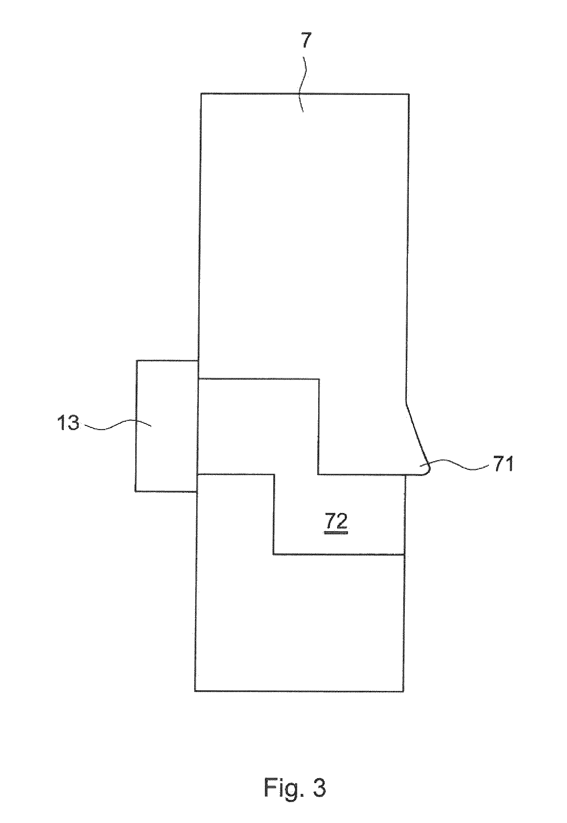

Fig. 3 zeigt in einer seitlichen Schnittansicht den vorderen Bereich des Gehäuses 7, insbesondere im Bereich eines im Inneren der erfindungsgemäßen Türsprechanlage angeordneten Mikrofons 13. Bei dem Mikrofon 13 kann es sich insbesondere um ein MEMS-Mikrofon handeln, welches eine hohe Richtcharakteristik aufweist und damit Nebengeräusche und Rückkoppelungen beim Betrieb der Türsprechanlage wirkungsvoll unterdrückt.

Die Vorderseite des Gehäuses 7 zeigt im Bereich des Mikrofons 13 eine als Labyrinth 72 ausgebildete Öffnung. Wie aus der Figur unmittelbar zu erkennen ist, führt die gezeigte Ausführung der Öffnung 72 dazu, dass ein direkter mechanischer Zugang zu dem Mikrofon 13 vom Außenbereich des Gehäuses 7 her nicht möglich ist. Dies hat einerseits die Folge, dass das Mikrofon 13 gegenüber beispielsweise Beschädigungsversuchen durch spitze Gegenstände von außen wirksam geschützt ist. Ferner wird das Eindringen von Wasser ins Gehäuseinnere weitgehend unterbunden. Der Schutz gegen eindringende Feuchtigkeit wird dadurch weiter verstärkt, dass im oberen Mündungsbereich des Labyrinths 72 an der Vorderseite des Gehäuses 7 der Vorsprung 71 ausgebildet ist, an welchem sich bildende Feuchtigkeit oder Spritzwasser abtropfen kann, ohne das Labyrinth 72 zu erreichen.

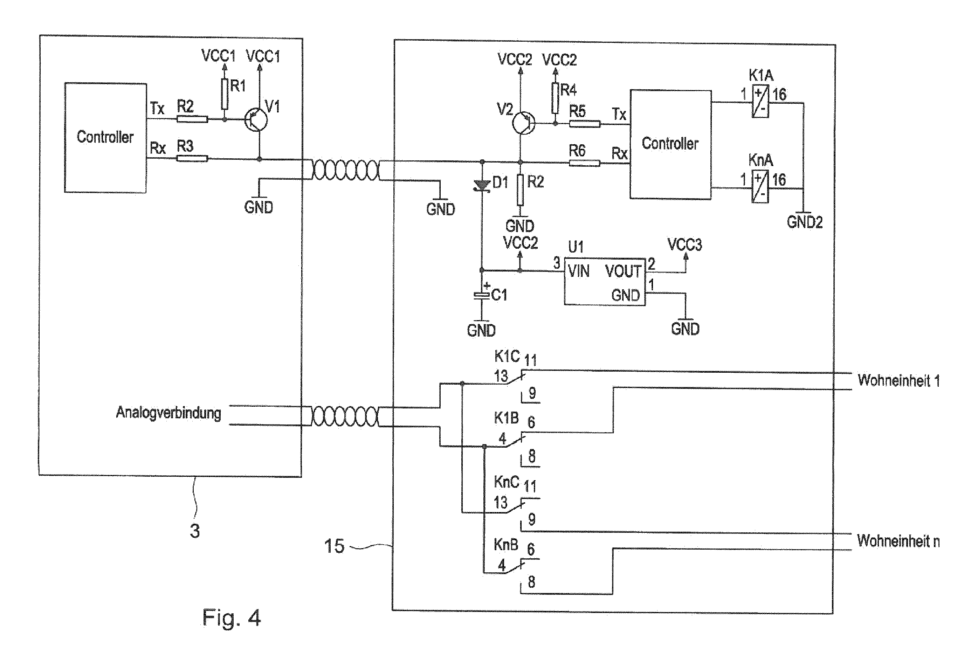

Figur 4 zeigt eine Prinzipschaltskizze einer vorteilhaften Ausführungsform der Erfindung, wobei die Türsprechanlage 3 mit einer Umschalteinheit 15 zum Anschluss an mehrere Telefonanlagen innerhalb eines Gebäudes ausgestattet ist.

Solange keine Datenübertragung zwischen der Türsprechanlage 3 und der Umschalteinheit 15 erfolgt, ist der Transistor V1 in der Türsprechanlage ständig durchgeschaltet. Darüber erfolgt die Stromversorgung der Umschalteinheit 15. In der Umschalteinheit 15 wird der Pufferkondensator C1 über die Diode D1 aufgeladen und der Spannungsregler U1 erzeugt die Versorgungsspannung für den Controller. Der Pufferkondensator C1 versorgt während der Zeit, in der eine Datenübertragung über die Leitung erfolgt, die Umschalteinheit 15 mit Energie.

Erfolgt eine Datenübertragung von der Türsprechanlage 3 zur Umschalteinheit 15, wird dies durch Aus- bzw. Einschalten des Transistors V1 mit einer festen Bitrate durchgeführt. Dabei wird zuerst ein Startbit zum Festlegen der Bitrate erzeugt. Anschließend erfolgt die Datenübertragung. Eine logische Eins wird durch Einschalten des Transistors dargestellt. Eine logische Null durch Sperren von V1. In der Umschalteinheit 15 werden die Bits an dem Rx Eingang des Controllers empfangen.

Erwartet die Türsprechanlage 3 eine Datenübertragung von der Umschalteinheit 15, wird der Transistor V1 ausgeschaltet. Anschließend kann die Umschalteinheit 15 durch Aus- bzw. Einschalten des Transistors V2 die Datenübertragung durchführen. Am Anfang der Datenübertragung steht auch hier ein Startbit zum Festlegen der Bitrate. In der Türsprechanlage 3 werden die Bits an dem Rx Eingang des Controllers empfangen.

Da die Umschalteinheit 15 während der Datenübertragung aus dem Pufferkondensator C1 versorgt wird, ist die Länge des Protokolls zu beschränken. Vorgesehen sind drei Byte, wobei dies letztlich auch von der Bitrate abhängt.

Nachfolgend werden weitere in der Figur 4 dargestellte Komponenten tabellarisch kurz erläutert:
Rn: Widerstände, insbesondere Schutzwiderstände R3 und R6 zum Schutz der Controllereingänge
VCCn: Versorgungsspannungen
KnA: Relais (Steuerseite)
KnB, KnC: Relais (Arbeitskontakte)

## Patentansprüche

1. Türsprechanlage (3) mit wenigstens einer Schnittstelle (4) zum Herstellen einer Kommunikationsverbindung (5) zwischen der Türsprechanlage (3) und wenigstens einem externen Gerät (6), wobei die Türsprechanlage (3) eingerichtet ist, es dem Gerät (6) nach Herstellen der Kommunikationsverbindung (5) zu ermöglichen, wenigstens eine Konfiguration der Türsprechanlage (3) zu ändern.

2. Türsprechanlage (3) nach Anspruch 1, wobei die Schnittstelle (4) als Bluetooth-Schnittstelle ausgebildet ist.

3. Türsprechanlage (3) nach Anspruch 1 oder 2, wobei die Türsprechanlage mit einer Umschalteinheit (15) ausgestattet ist, mit welcher eine Mehrzahl von Telefonanschlüssen, insbesondere verschiedener Wohneinheiten eines Mehrparteienhauses, ausgewählt werden kann.

4. Türsprechanlage (3) nach einem der vorherigen Ansprüche, wobei die Umschalteinheit (15) über eine Versorgungs- und/oder Steuerleitung mit der Türsprechanlage (3) verbunden ist.

5. Türsprechanlage (3) nach einem der vorherigen Ansprüche, wobei die Türsprechanlage (3) mindestens einen Bewegungsmelder aufweist.

6. Türsprechanlage (3) nach einem der vorangehenden Ansprüche mit wenigstens einer Folie, die in wenigstens einem flächigen Abschnitt eines Gehäuses (7) und/oder eines Deckels angeordnet ist.

7. Türsprechanlage (3) nach Anspruch 6, wobei die Folie mit in das spritzgegossene Gehäuse (7) oder den Deckel eingespritzt ist.

8. Türsprechanlage (3) nach einem der vorangehenden Ansprüche, wobei ein Fotosensor (9) zum Detektieren einer Umgebungshelligkeit vorgesehen ist und die Türsprechanlage (3) eingerichtet ist, wenigstens eine Lichtquelle (12) zu aktivieren, wenn die vom Fotosensor (9) detektierte Umgebungshelligkeit kleiner als ein vorgegebener Grenzwert ist.

9. Türsprechanlage (3) nach einem der Ansprüche 5 bis 8, die eingerichtet ist, ein optisches Erscheinungsbild wenigstens eines Teilbereichs ihrer Oberfläche zu ändern, wenn der Bewegungsmelder eine Bewegung registriert.

10. Türsprechanlage (3) nach einem der vorangehenden Ansprüche, wobei mindestens eine Lichtquelle und ein Lichtwellenleiter zur Einkopplung des von der Lichtquelle emittierten Lichtes im Inneren eines Gehäuses (7) angeordnet sind und wobei der Lichtwellenleiter geeignet ist, das eingekoppelte Licht der Außenseite eines Gehäuses (7) bzw. eines Deckels der Türsprechanlage zuzuleiten.

11. Türsprechanlage (3) nach einem der vorangehenden Ansprüche, wobei ein Lautsprecher (8) im Inneren eines Gehäuses (7) angeordnet und das Gehäuse (7) wenigstens in einem dem Lautsprecher (8) benachbarten oder gegenüberliegenden Bereich lückenlos geschlossen ist.

12. Türsprechanlage (3) nach einem der vorangehenden Ansprüche, mit einem integrierten Modul für die Anbindung an ein Mobilfunknetz.

13. Verfahren zum Betrieb einer Türsprechanlage (3) mit mindestens den folgenden Schritten
- Detektion einer Annäherung einer Person
- Bestimmung des Abstandes der sich nähernden Person von der Türsprechanlage (3)
- Aufnahme eines Bildes der Person bei Unterschreiten eines vorgegebenen Mindestabstandes
- Speicherung des aufgenommenen Bildes in einem Zwischenspeicher.

14. Verfahren nach Anspruch 13, wobei das aufgenommene Bild auf ein Endgerät übertragen wird.

15. Verfahren nach Anspruch 14, wobei es sich bei dem Endgerät um ein Mobiltelefon handelt.

16. Verfahren nach einem der Ansprüche 14 oder 15, wobei die Übertragung des Bildes durch eine zusätzliche bewusste Handlung der sich nähernden Person ausgelöst wird.

17. Verfahren nach Anspruch 16, wobei es sich bei der bewussten Handlung um das Betätigen eines Bedienelementes der Türsprechanlage handelt.

18. Verfahren nach Anspruch 17, wobei es sich bei dem Bedienelement um einen realen oder auf einem Berührungsbildschirm dargestellten Klingelknopf handelt.
